# EUROPEAN PATENT APPLICATION

(11) **EP 2 187 487 A1**
(43) Date of publication of application: **19.05.2010**
(21) Application number: 08792538.4
(22) Date of filing: 19.08.2008
(51) Int. Cl.: H01S 3/16

(54) **LASER OSCILLATOR AND LASER BEAM OSCILLATION METHOD**

(30) Priority: 24.08.2007 JP 2007218019
(71) Applicant: TOKAI UNIVERSITY EDUCATIONAL SYSTEM, Shibuya-ku Tokyo 151-0063 (JP)
(72) Inventor: OTSUKA, Kenju, Hiratsuka-shi Kanagawa 259-1292 (JP)
(74) Representative: Ilgart, Jean-Christophe
(86) International application number: PCT/JP2008/064755
(87) International publication number: WO 2009/028352

(57) **Abstract**

By using a ceramics laser medium such as Nd:YAG ceramics or Yb:YAG ceramics, division of a lateral mode pattern to a local mode is suppressed so that single frequency, linear polarization oscillation are achieved in TEM₀₀ mode. A laser oscillator comprising a laser light source for oscillating the pumping light, and a laser medium of Nd:YAG ceramics or Yb:YAG ceramics having an average grain size of 5µm or less upon which the pumping light impinges is provided. The laser medium may have a first surface having a first dielectric multilayer film, and a second surface having a second dielectric multilayer film.

## Description

### TECHNICAL FIELD

The present invention is related to a laser oscillator and a method of oscillating a laser beam.

### BACKGROUND ART

Conventionally, a single crystal such as Nd:YAG is known as a material of a solid-state laser medium. However, it is difficult to obtain a product with a high concentration of additives due to manufacturing limitations and it is difficult to obtain a large single crystal so that large costs and a long time are required for manufacture. On the other hand, a laser medium (ceramic laser medium) using ceramics is known recently as a material of laser medium with easy formation into an arbitrary shape and with easy enlargement in scale. For example, a ceramic laser medium such as Nd:YAG and Yb:YAG is attracting attention (for example, refer to non-patent documents 1-3).

In the case where a ceramic laser medium is used, an oscillation in fundamental transverse mode (TEM₀₀ mode), which is important in practice, is suppressed and the oscillation has a tendency to easily segregate into a plurality of local transverse modes having different frequencies and polarization states. Also, it is known that when this type of segregation occurs, an intensity modulation at beat frequencies among local modes appears due to the coupling of electrical fields of spatially adjacent local modes and the oscillation becomes unstable (for example, refer to non-patent documents 4 and 5).
Non-patent document 1: I. Shoji, S. Kurimura, Y. Sato, T. Taira, A. Ikesue, and K. Yoshida, Opt. Lett. 77, 939 (2000).
Non-patent document 2: J. Lu, M. Prabhu, J. Song, C. Li, J. Xu, K. Ueda, A. Kaminskii, H. Yagi, T. Yanagitani, Appl. Phys. B, 71, 469 (2000).
Non-patent document 3: K. Takichi, J. Lu, A. Shirakawa, H. Yagi, K. Ueda, T. Yanagitani, A. Kaminskii, Phys. Stat. Sol (a) 200, R5 (2003).
Non-patent document 4: T. Narita, Y. Miyasaka, and K. Otsuka, Jpn. J. Appl. Phys. 37, L1168 (2005).
Non-patent document 5: K. Otsuka, T. Narita, Y. Miyasaka, C.-C. Ching, J. -Y. Ko, and S. -C. Chu, Appl. Phys. Lett. 89, 081117 (2006).

### DISCLOSURE OF THE INVENTION

### Problems to be Solved by the Invention

The present invention provides a laser oscillator and a method of oscillating a laser beam in which a segregation into local modes of transverse mode patterns is suppressed and a single frequency oscillation is achieved in a TEM₀₀ mode using a ceramic laser medium having a material such as Nd:YAG ceramics or Yb:YAG ceramics.

### Means for Solving the Problems

The present application discloses a laser oscillator having a laser light source which emits a pumping light, and a laser medium having a Nd:YAG ceramic or a Yb:YAG ceramic with an average grain size of 5 µm or less and into which the pumping light is irradiated.

### Effects of the Invention

According to the present invention, a laser oscillator and a method of oscillating a laser beam are provided in which a segregation into local modes of transverse mode patterns is suppressed and a single frequency oscillation is achieved in a TEM₀₀ mode using a ceramic laser medium.

### Brief Explanation of the Drawings

Fig. 1 is a functional block diagram of a laser oscillator related to a first embodiment of the present invention.
Fig. 2 is a photograph of an Nd:YAG ceramic used as a laser oscillator medium related to the first embodiment of the present invention.
Fig. 3 is a functional block diagram of the laser oscillator related to the first embodiment of the present invention.
Fig. 4 is a diagram which shows an oscillation spectrum of a laser beam obtained by the laser oscillator, related to the first embodiment of the present invention, measured with a multi wavelength meter.
Fig. 5 is a diagram which shows the input/output characteristics of the laser oscillator related to the first embodiment of the present invention.
Fig. 6 is a photograph of an Nd:YAG ceramic used as a laser medium of a conventional laser oscillator.
Fig. 7 is functional block diagram of a device which measures the characteristics of a laser beam obtained by the laser oscillator related to the first embodiment of the present invention.
Fig. 8 is a diagram which shows the characteristics of a laser beam obtained by the laser oscillator related to the first embodiment of the present invention.
Fig. 9 is a diagram which shows the characteristics of a laser beam obtained by the laser oscillator related to the first embodiment of the present invention.
Fig. 10 is a diagram which shows the characteristics of a laser beam obtained by a conventional laser oscillator.
Fig. 11 is a functional block diagram of a laser oscillator related to a second embodiment of the present invention.
Fig. 12 is a photograph of a Yb:YAG ceramic used as a laser oscillator medium related to the second embodiment of the present invention.
Fig. 13 is a functional block diagram of a laser oscillator related to the second embodiment of the present invention.
Fig. 14 is a functional block diagram of a device which measures the characteristics of a laser beam obtained by the laser oscillator related to the second embodiment of the present invention.
Fig. 15 is a diagram which shows the input/output characteristics of the laser oscillator related to the second embodiment.
Fig. 16 is a diagram which shows a far-field pattern and the strength distribution of a laser beam obtained by the laser oscillator related to the second embodiment of the present invention.
Fig. 17 is a diagram which shows the input/output characteristics for examining the dependency of a transverse mode on a pumping beam diameter.
Fig. 18 is a diagram which shows observation results for examining the dependency of a transverse mode on a pumping beam diameter.
Fig. 19 shows SEM photographs of samples with average grain sizes of 59.05µm, 51.85µm, 37.35µm, and 29.03µm.
Fig. 20 shows histograms of the sizes of sample grains with average grain sizes of 59.05µm, 51.85µm, 37.35µm, and 29.03µm.
Fig. 21 is a functional block diagram of a laser oscillator related to a fifth embodiment of the present invention.
Fig. 22 is a diagram which shows the characteristics of a laser beam obtained by a laser oscillator related to the fifth embodiment of the present invention.

### Descriptions of the reference numerals

- 101: laser light source
- 102: pumping light
- 103: laser medium
- 104: lasing light
- 105: first surface
- 106: second surface
- 1101: laser light source
- 1102: pumping light
- 1103: laser medium
- 1104: lasing light
- 1105: first surface
- 1106: second surface

### BEST MODE FOR CARRYING OUT THE INVENTION

Below, the best mode for carrying out the present invention is explained in embodiments with references to the diagrams. Furthermore, the present invention is not limited to the embodiments explained below and can be carried out in a variety of embodiments. For example, the laser oscillator related to the present invention can also be carried out in the form of an external resonator.

### (First Embodiment)

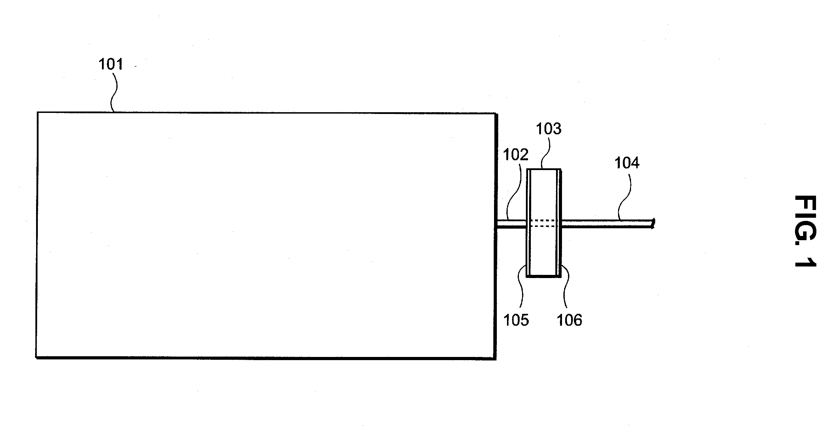

Fig. 1 shows a functional block diagram of a laser oscillator related to the first embodiment of the present invention. The laser oscillator related to the first embodiment of the present invention includes a laser light source 101 and a laser medium 103.

The laser light source 101 emits a pumping light 102. In the present embodiment, though a laser light source using a semiconductor is used for the pumping light source, a gas laser (for example, an Ar laser or a Kr laser) or a solid-state laser (for example a Ti sapphire laser) may also be used. In the case of using a Nd:YAG ceramic as a material of the laser medium 103, which is explained below, the wavelength of the pumping light 102 is 808nm or 885nm for example.

The laser medium 103 is a laser medium which is irradiated with the pumping light 102. In the present embodiment, a Nd: YAG ceramic with an average grain size of 5µm or less is used as a laser medium. In the present embodiment, the laser medium 103 forms an endface resonator. That is, let a first face 105 to be the surface which is irradiated with the pumping light 102 of the laser medium 103 and a second face 106 to be the opposite face from which the lasing beam 104 is emitted, the first face 105 and the second face 106 of the laser medium is applied with a mirror-like finishing and a coating so that an excitation is performed by the pumping light 102. The coating may be applied for example by forming multilayer films on the first face 105 and second face 106. A dielectric multilayer film may be an example of the multilayer film. Furthermore, the coating of the first face 105 and the second face 106 do not have to be the same.

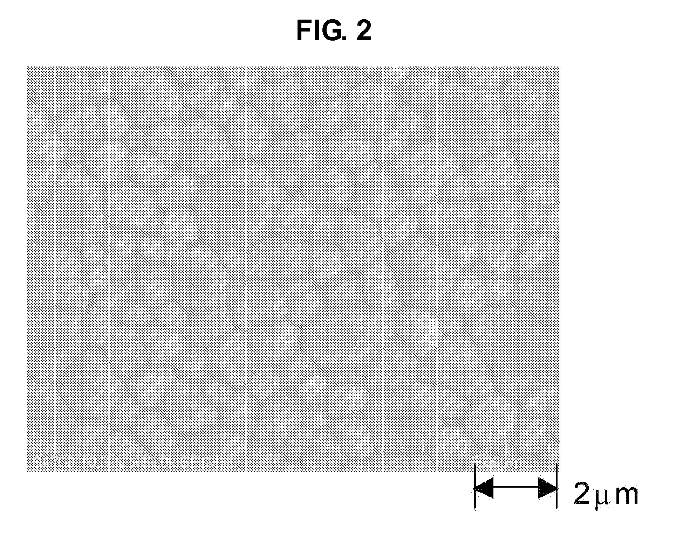

Fig. 2 shows a photograph taken by a scanning electron microscope (SEM) of a thermally etched surface with regards to one sample of a Nd:YAG ceramic used as the laser medium 103. It is possible to grasp the structure of a grain with this type of photograph. The average grain size of the laser medium 103 used in the laser oscillator of the present invention is 5µm or less. Here, an average grain size is defined as an average (an arithmetic average) length of the longest part of each grain. In the bottom right of the photograph of Fig. 2, the length of the arrow line is equivalent to 2µm. The sample shown in the photograph of Fig. 2 has an average grain size of 1.16µm.

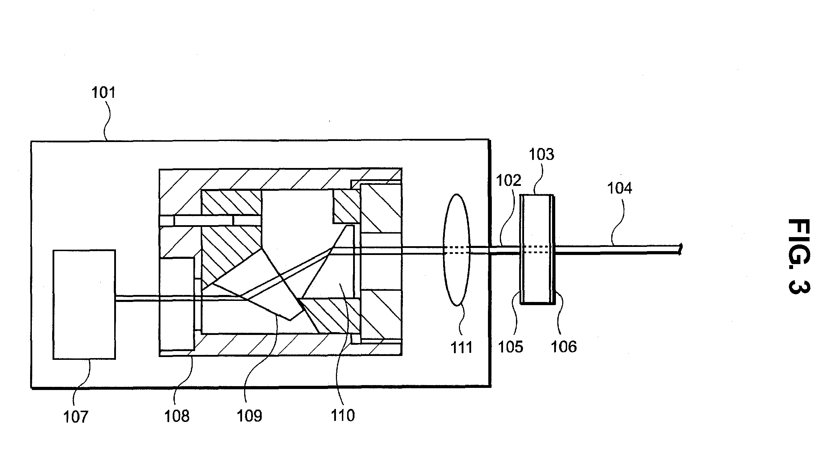

Fig. 3 shows a detailed functional block diagram of one example of a laser oscillator which generates a laser beam using a Nd:YAG ceramic with an average grain size of 5µm or less as a laser medium material as shown in Fig. 2. A semiconductor laser oscillator 107 is used in order to obtain a collimated laser beam with a wavelength of 808nm as the pumping light 102. Because the laser beam obtained by the semiconductor laser oscillator 107 has an elliptic shape, an anamorphic prism device 108 is used to convert the beam to a circle shape. The anamorphic prism device 108 includes two prisms 109 and 110 and corrects the irradiated elliptical shaped laser beam to a circle shape. The corrected laser beam is focused by an objective lens 111 in order to perform excitation in the laser medium 103. The numerical aperture of the objective lens is 0.25. In this way, a pumping beam with an average beam diameter of 80microns is irradiated into the laser medium 103.

As a material of the laser medium 103, a Nd:YAG ceramic doped with 1 at. % of Nd is used. It has a shape of a plate with 1mm thickness. An absorption coefficient of the pumping light focused by the objective lens 111 is 3.55m⁻¹. The SEM photograph shown in Fig. 2 has been taken using this laser medium.

Coating is applied with dielectric multilayer films etc. to the first surface 105 and to the second surface 106 of the laser medium 103. An antireflection coating and high reflecting coating are applied to the first face 105 with respect to two different wavelengths. Here, an antireflection coating is a film which has properties which allow light of a certain wavelength to pass through. For example, at a wavelength of 808nm, which is a wavelength of the pumping light, 95% or more passes through. A high reflecting coating is a film which has properties such that a light at a certain wavelength is reflected. For example, at a wavelength of 1064nm, which is a wavelength of a laser beam which is oscillated, 99.8% or more is reflected.

In addition, a high reflecting coating is also applied to the second face 106 with a dielectric multilayer film etc. For example, 90% or more, more preferably 97% or more, is reflected at a wavelength of 1064nm. In particular, at 1064nm of a wavelength of the lasing beam, 99% or more may be reflected.

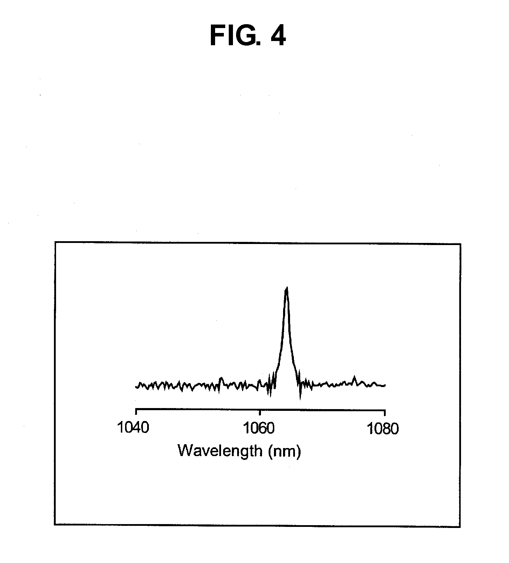

Fig. 4 shows the measurement results, which are obtained with a multi wavelength meter, of a laser beam oscillated by the laser oscillator shown in Fig. 3. The resolution of the multi wavelength meter used is 0.1nm. As is shown in Fig. 4, an oscillation at a single transition line with a wavelength of 1064nm is confirmed.

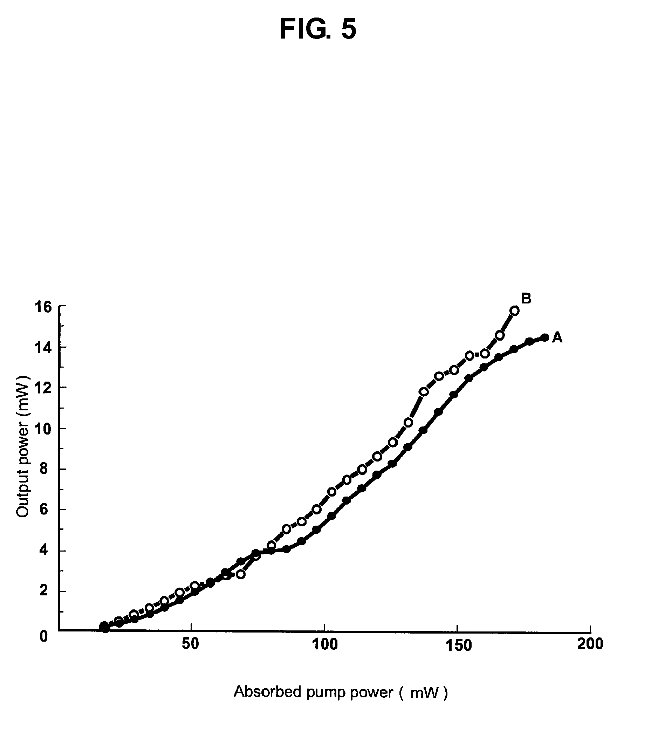

Fig. 5 shows the input/output characteristics of the laser oscillator shown in Fig. 3. That is, Fig. 5 shows a graph with the power (the absorbed pump power (mW)) of pumping light irradiated to the laser medium 103 corresponding to the horizontal axis and the power (the output power (mW)) of an oscillated laser beam corresponding to the vertical axis. The input/output characteristics in the case where a Nd:YAG ceramic is used having an average grain size of 1.16µm, which is less than an average grain size of 5µm or less shown in the SEM photograph in Fig. 2, corresponds to a curve shown by the symbol A in the diagram. Furthermore, for comparison, the symbol B corresponds to the characteristics in the case where a material used conventionally, that is, a material with the same conditions apart from an average grain size of 19.23µm, is used instead of the Nd:YAG ceramic with an average grain size of 1.16µm, which is the material of the above stated laser medium 103. It is clear from Fig. 5 that a large difference can not be seen in the input/output characteristics between the material used in the present invention and the material used conventionally.

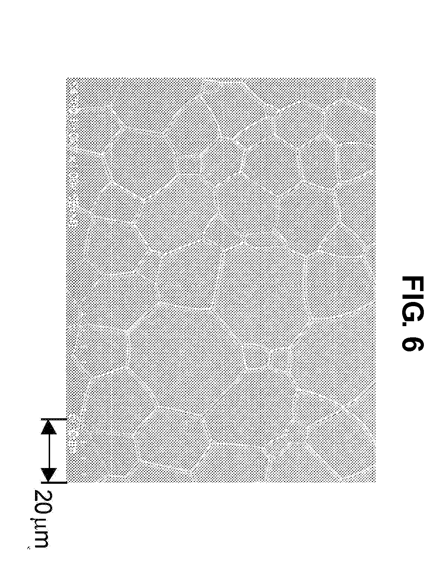

Fig. 6 shows an SEM photograph of a material used conventionally as stated above. The length of the arrow line shown in the bottom right of the photograph of Fig. 6 is equivalent to 20µm. It can be seen that the average grain size is 19.23µm.

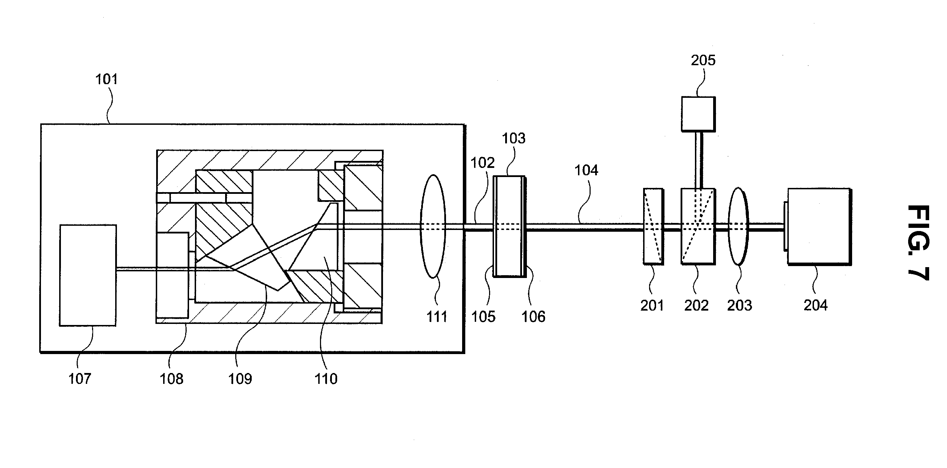

Fig. 7 shows a functional block diagram of a device for the purposes of comparison wherein the detailed characteristics are measured of laser beams obtained in the case of using (1) a laser medium of the first embodiment of the present invention, that is, a laser medium in which a first face is applied with a coating which reflects 99.8% or more at 1064nm and allows 95% or more to pass through at 808nm using a 1mm thick Nd:YAG ceramic material doped with 1 at. % Nd and an average grain size less than or equal to 5µm, and in which a second face is applied with a coating which reflects 99% or more at 1064nm and (2) a laser medium in which a first face is applied with a coating which reflects 99.8% or more at 1064nm and allows 95% or more to pass through at 808nm using a 1mm thick Nd:YAG ceramic material doped with 1 at. % Nd and an average grain size of 30µm or so, and in which a second face is applied with a coating which reflects 99% or more at 1064nm.

As is shown in Fig. 7, after a laser beam 104 oscillated by the laser oscillator related to the first embodiment of the present invention passes through a light polarizer 201 and through a splitter 202, one part is focused on a lens 203 and irradiated into a scanning Fabry-Pérot interferometer 204, and the other part is irradiated into a PbS infra red camera 205.

As a result of the inventor's measurement on the detailed characteristics of an obtained laser beam with regards to a plurality of Nd:YAG ceramic materials with different average grain sizes, a stable TEM₀₀ mode oscillation has been obtained without forming a local transverse mode in the case of using fine ceramics with an average grain size of 5µm or less.

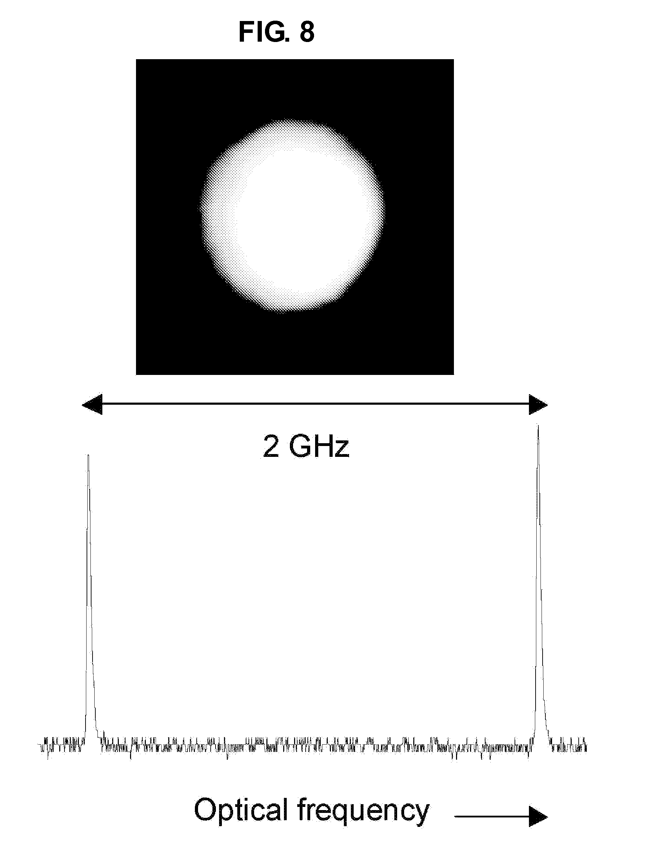

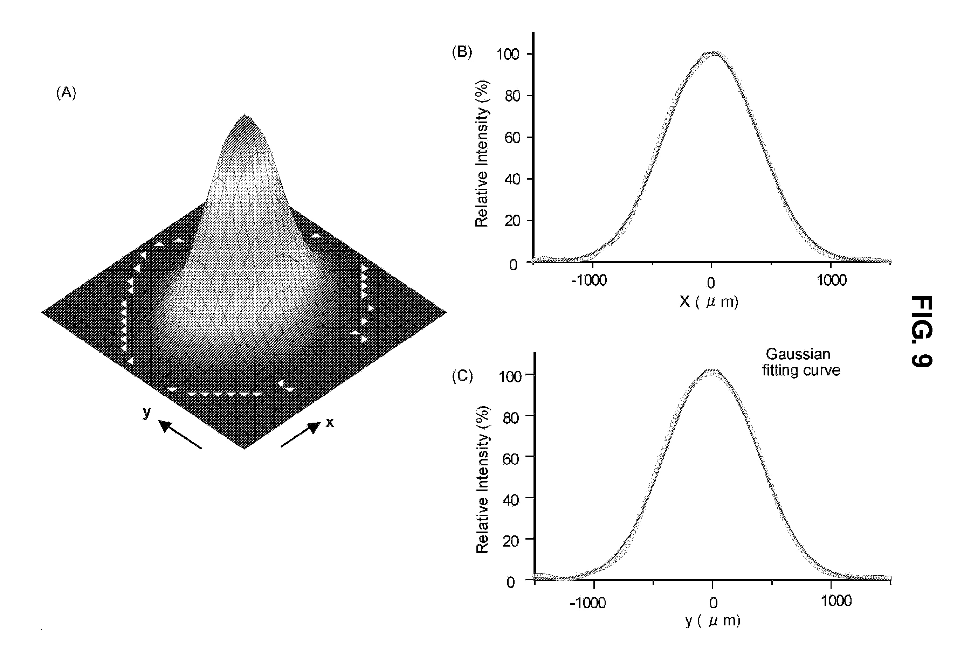

Fig. 8 and Fig. 9 show the characteristics of a laser beam obtained in the case of using an Nd:YAG ceramic material with an average grain size of 5µm or less as in the laser oscillator related to the first embodiment of the present invention.

Fig. 8 shows a far-field pattern (in the upper part of the drawing) and a light spectrum (in the lower part of the drawing) of a laser beam obtained by the laser oscillator related to the first embodiment of the present invention. In the drawing of the light spectrum, the optical frequency corresponds to the horizontal axis and the length of the arrow line which shows the interval between left and right peaks is equivalent to 2GHz. As is shown by these, a single frequency oscillation is achieved in a TEM₀₀ mode in all the pumping power ranges by the laser oscillator related to the first embodiment of the present invention.

In addition, a far-field strength distribution is shown in Fig. 9(A), a Gaussian fitting curve in an X direction is shown in Fig. 9(B), and a Gaussian fitting curve in a Y direction is shown in Fig. 9(C) with respect to a laser beam obtained by the laser oscillator related to the first embodiment of the present invention. The vertical axis in the graph shown in Fig. 9(B) and Fig. 9(C) indicates the relative intensities shown in percentage units. As is shown by these diagrams, the mode purity, which is the ratio of an actual measured value included in a theoretical TEM₀₀ mode, is 99% or more in all the pumping power range.

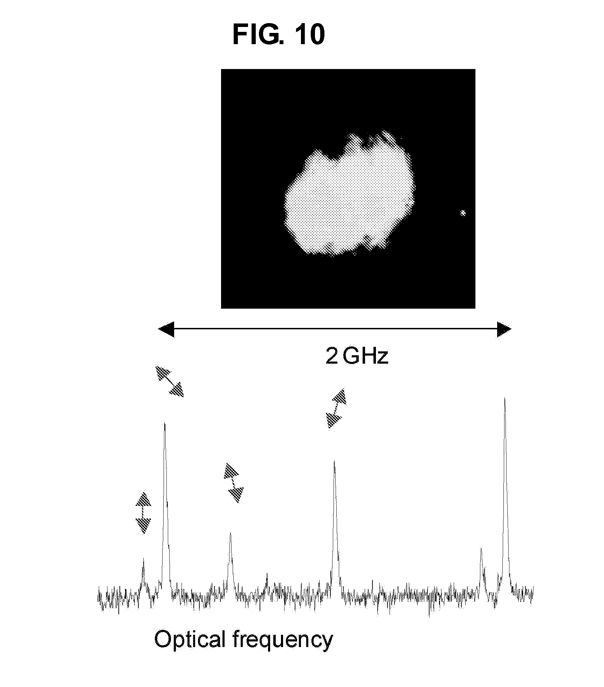

On the other hand, for comparison, Fig. 10 shows a far-field pattern (in the upper part of the drawing) and a light spectrum (in the lower part of the drawing) of a laser beam obtained by the conventionally used laser oscillator and by using a 1 mm thick Nd:YAG ceramic material doped with 1 at. % Nd and an average grain size of about 30µm, instead of an Nd:YAG ceramic with an average grain thickness of 5µm or less, which is the material of the laser medium 103. In Fig. 10, as shown in Fig. 8, the optical frequency corresponds to the horizontal axis and the length of the arrow line which shows the interval between the peaks positioned at the furthest left and furthest right is equivalent to 2GHz. It is clear that the laser beam obtained by the conventionally used laser oscillator is in a specific longitudinal mode, the oscillating frequency is slightly different and it is segregated into 4 local modes with different polarization states. As is shown by the arrow in the lower part of Fig. 10, a linearly polarized wave with different polarization directions is shown.

In this way, the reason why a difference in characteristics arises between a laser beam obtained by the laser oscillator related to he first embodiment of the present invention, and a laser beam obtained by a conventional laser oscillator is presumed as follows. First, in the conventional laser oscillator, each single crystal's grain size is on the order of a few tens of µm. In addition, these crystal orientations are randomly distributed. When the average grain size is presumed as 30µm, the beam diameter of a TEM₀₀ mode determined by a refractive index change based on a temperature distribution in a radial direction of a sample formed by an pumping light is 160µm due to a thermal lens effect. Therefore, a few single crystal grains which are sufficiently large compared to a wavelength with different crystal orientations are averagely included within a cross section of a TEM₀₀ mode beam. Due to this and the place dependency of thermal birefringence effects, the oscillation frequency and the eigen-polarization state are not uniquely determined. As a result, an oscillation transverse mode is segregated into a plurality of local modes with different frequencies and polarization states. A local mode is formed reflecting the grain structure which is dependent on an excitation (that is, oscillation) position, and various dynamic instabilities arise including chaos due to the mutual coupling between local modes

On the other hand, in the laser oscillator related to the first embodiment of the present invention, it is considered that because the grain size is the same as the oscillation wavelength of a few µm and very small, the transverse mode is not formed locally and the segregation into local modes is blocked and the accompanying dynamic instability does not arise.

As stated above, in the laser oscillator related to the first embodiment of the present invention, by using a Nd:YAG ceramic material, the segregation into local modes of a transverse mode pattern is suppressed and an oscillation of a single frequency is achieved by a TEM₀₀ mode.

### (Second Embodiment)

Next, a laser oscillator in which the segregation into local modes of transverse mode patterns is suppressed and an oscillation of a single frequency is achieved in a TEM₀₀ mode by using a Yb:YAG ceramic material is explained. The inventor of the present invention, who has examined the measurement results of the characteristics of a laser beam obtained by the laser oscillator related to the first embodiment of the present invention, has predicted that there would be no segregation into local modes and that the stable operation would be possible even with a laser oscillator of a different material using a micro-grained ceramic which has an average grain size of 5µm or less, and has invented a laser oscillator related to the second embodiment of the present invention.

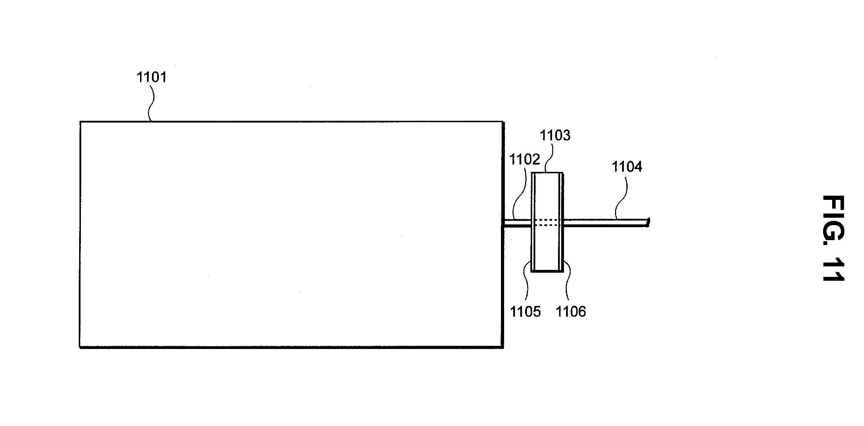

Fig. 11 shows a functional block diagram of a laser oscillator related to the second embodiment of the present invention. The laser oscillator related to the second embodiment of the present invention includes a laser light source 1101 and a laser medium 1103.

The laser light source 1101 emits a pumping light 1102. For example, a laser light source which uses a semiconductor may be used. In the case of using a Yb:YAG ceramic as the laser medium 1103 explained later, the wavelength of the pumping light 1102 is, for example, 940nm or 970nm.

The laser medium 1103 is a laser medium which is irradiated with the pumping light 1102. In the present embodiment, a Yb:YAG ceramic with an average grain size of 5µm or less is used as a laser medium. Let a first face of the laser medium 1103 be the face which is irradiated with the pumping light 1102 and a second face be the opposite face from which a lasing beam 1104 is emitted, coatings are applied to the first face 1105 and the second face 1106 of the laser medium 1103 in order to perform an excitation by the pumping light 1102. The coatings may be applied by forming dielectric multilayer films on the first face 1105 and second face 1106 for example. Furthermore, the coatings of the first face 1105 and the second face 1106 do not have to be the same.

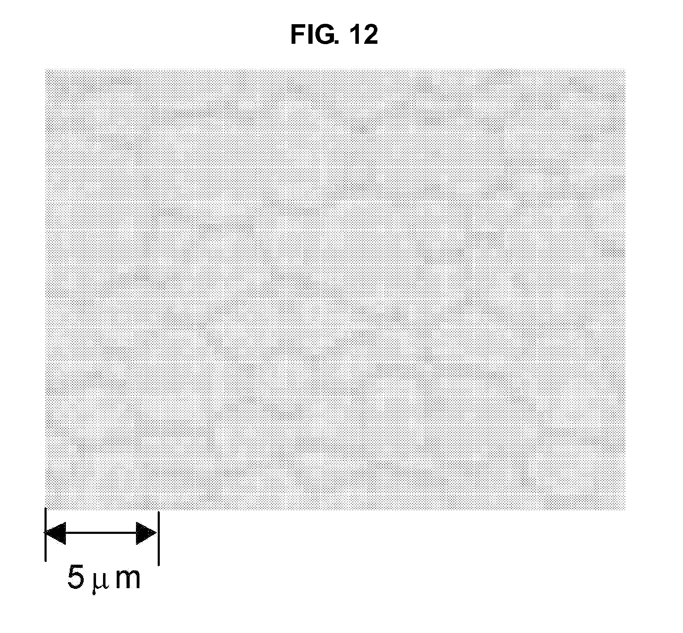

Fig. 12 shows an SEM photograph of a thermally etched surface of a Yb:YAG ceramic used as the laser medium 1103. A grain structure is shown in this photograph. The length of the arrow line shown at the bottom left of the photograph in Fig. 12 is equivalent to 5µm. The grain size as shown in Fig. 12 is 3.20µm, which is less than 5µm.

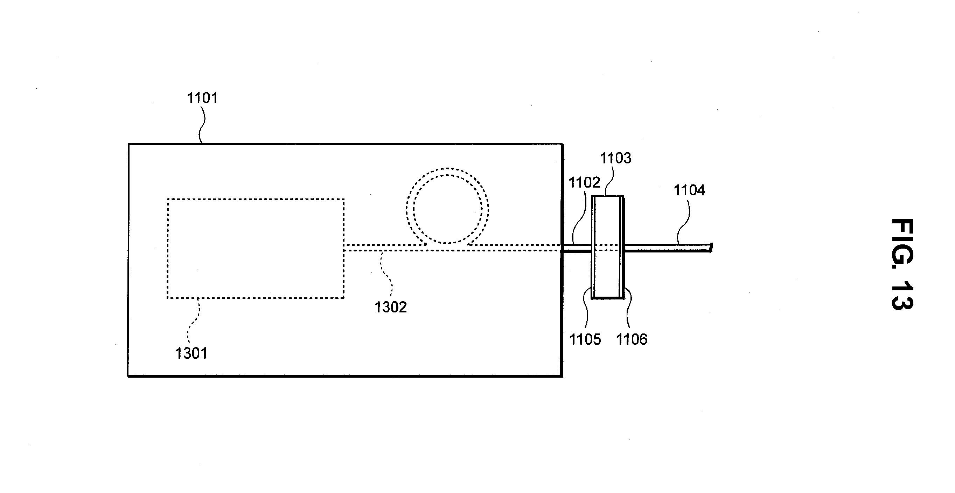

Fig. 13 shows a detailed functional block diagram of one example of an oscillator which generates a laser beam using a Yb:YAG ceramic with an average grain size of 5µm or less as the laser medium as shown in Fig.12. A semiconductor laser 1301 of a wavelength of 970nm with a fiber 1302 having a core diameter of 100µm is used as the pumping light 1102. Although a semiconductor laser 1301 is used as the laser light source 1102 in the present embodiment, it is not limited to this.

A Yb:YAG ceramic doped with 5 at. % Yb is used as the laser medium 1103. It has a shape of a plate with 2 mm thickness. The SEM photograph shown in Fig. 12 has been taken using this laser medium.

Coatings are applied to the first face 1105 and second face 1106 of the laser medium 1103 with dielectric multilayer films. An antireflection coating and a high reflecting coating are applied to the first face 1105 with respect to two different wavelengths. For example, 95% or more passes through the antireflection coating at a wavelength of 970nm of the pumping light. In addition, for example, 99.8% or more is reflected by the high reflecting coating at a wavelength of 1049nm of the laser beam which is oscillated.

In addition, a high reflecting coating is also applied to the second face 1106 with a dielectric multilayer film. For example, 97% or more of the oscillated laser beam is reflected at a wavelength of 1049nm. In particular, at 1049nm, 99% or more may be reflected.

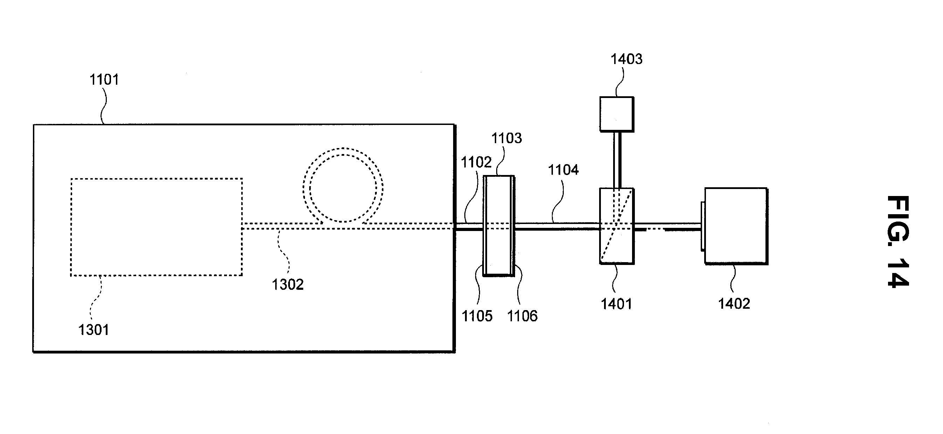

Fig. 14 is a functional block diagram of the structure of a device which is used when measuring the characteristics of the light beam 1104 obtained by the laser oscillator related to the second embodiment of the present invention. The laser beam 1104 obtained by the laser oscillator related to the second embodiment of the present invention is irradiated into a beam splitter 1401 and is split into beams one of which is irradiated to a beam profiler (Beam Master) 1402 and another of which is irradiated to a wavelength meter 1403.

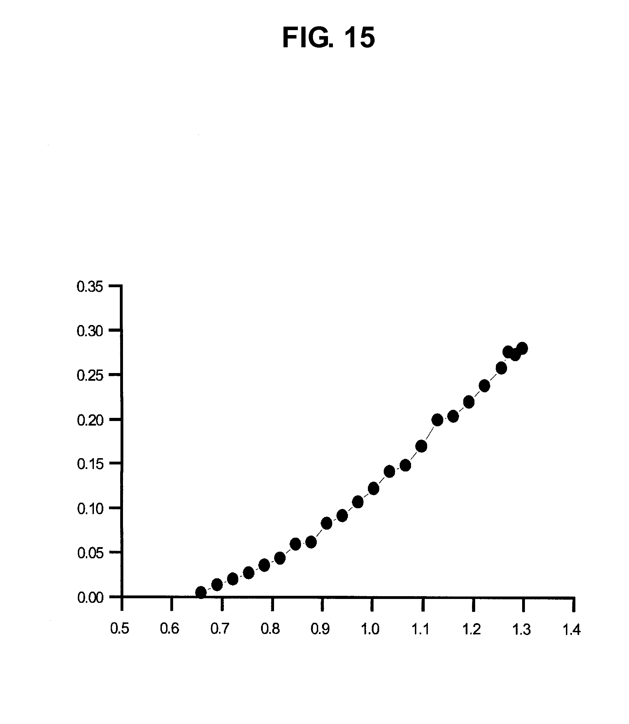

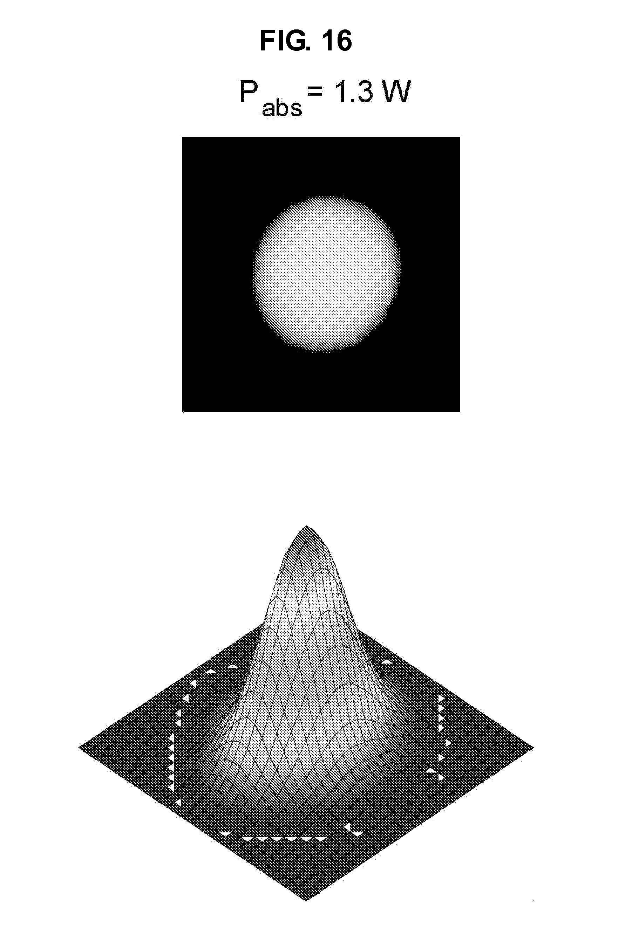

Fig. 15 shows the input/output characteristics of the laser oscillator related to the second embodiment of the present invention, and Fig. 16 shows a far-field pattern and a strength distribution of the obtained laser beam 104. It is understood that a linear polarized oscillation has been obtained at a transition line with a wavelength of 1049nm.

Therefore, it has been shown that there is no segregation into local modes and a stable operation is possible even in a laser oscillator which has a material of a small grain ceramic which has an average grain size of 5µm or less other than Nd:YAG.

In addition, in the laser oscillator related to the second embodiment of the present invention, by using a Yb:YAG ceramic material, a segregation into local modes of transverse mode patterns is suppressed and an oscillation of a single frequency is achieved in a TEM₀₀ mode.

### (Third Embodiment)

In the first and second embodiments explained hereto, while the ceramics used are different: Nd:YAG is used in one embodiment and Yb:YAG is used in another embodiment, the beam diameters of the pumping lights between the first and second embodiments are also different. Then, the third embodiment of the present invention is explained in order to confirm that that pumping beam diameter dependency of the transverse mode properties does not exist. When the pumping beam diameter is increased, a gain region in a radial direction becomes larger and a pumping beam diameter increases. In this case, while a threshold pumping power increases because an oscillation mode volume increases, because the pumping beam diameter can be increased compared to an average grain size, a laser beam is generated under the following conditions in order to examine
(1) whether the formation of a local mode is decided by the ratio of average grain size and pumping beam diameter (a relative value) or
(2) whether the average grain size itself, which is a few µm i.e., substantially the same as a wavelength, is effective for suppressing the formation of a local mode.

That is, instead of an object lens, a pumping beam diameter is increased by using a focus distance of 5cm and 9cm aspherical lens as a focus lens of a pumping light emitted by a laser semiconductor. In this way, the pumping beam diameter becomes 530µm and the pumping beam diameter becomes 400µm.

As a laser medium, an average grain size of 19.23µm, that is, a laser beam is oscillated using a material shown in the TEM photograph in Fig. 6 and the input/output characteristics, the oscillation pattern and the polarization characteristics of this laser beam are measured.

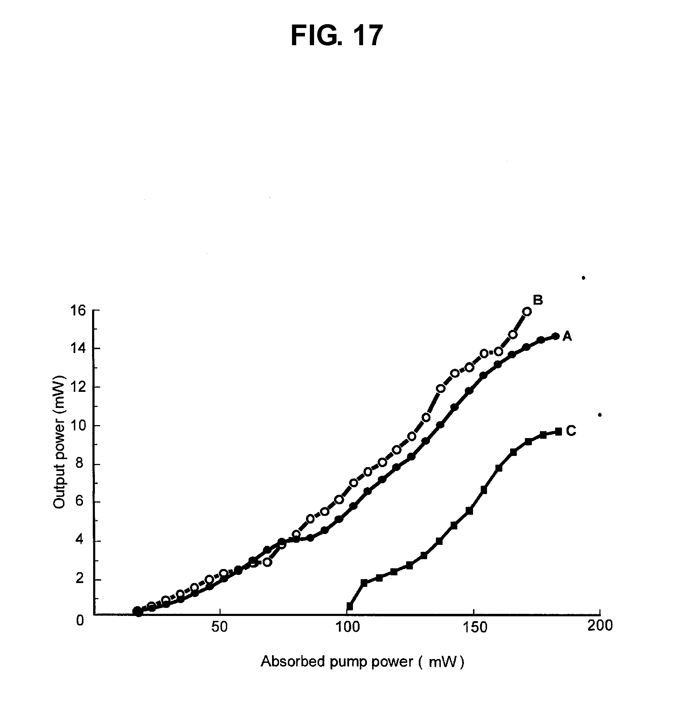

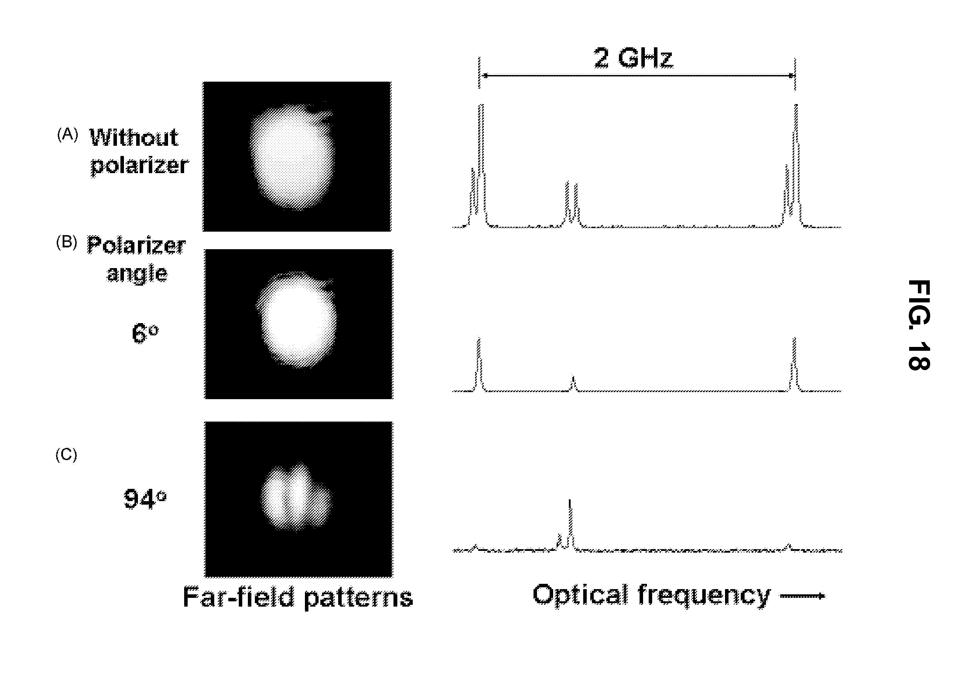

A graph of input/output characteristics indicated by C a in the present embodiment as well as the input/output characteristics A and B in the first embodiment, are shown in Fig. 17. In Fig. 17, the horizontal axis corresponds to the absorbed pump power (mW) and the vertical axis corresponds to the output power (mW). In addition, Fig. 18 shows an example of a result in which the polarization-dependent oscillation pattern and oscillation spectrum are measured at a different orientation of the polarizer after the laser oscillation beam passes through the polarizer. That is, Fig. 18(A) shows a far-field pattern and a spectrum without a polarizer, Fig. 18(B) shows a far-field pattern and a spectrum when the polarizer angle is 6°, and Fig. 18(C) shows a far-field pattern and a spectrum when the polarizer angle is 94°. As is so with Fig. 8, the length of the arrow line which shows the interval between left and right peaks of the spectrum in Fig. 18 is equivalent to 2GHz.

It can be seen that segregation into a plurality of local modes with different frequencies and polarization states occurs, which is the same as the experiment result (oscillation beam diameter: 160µm) with a narrow pumping beam diameter in an object lens in the first embodiment. That is, it is understood that the formation of a local mode occurs regardless of the pumping beam diameter, and the small grain ceramic having an oscillation wavelength suppresses a local mode and is effective for oscillation in a stable TEM₀₀ mode.

### (Fourth Embodiment)

The inventor has confirmed that whether the segregation into local modes occurs is dependent on average grain size and that the border of the average grain size is 5 µm. That is, an oscillation experiment of a laser has been performed by using a number of samples of Nd:YAG ceramics and Yb:YAG ceramics which have different average grain sizes as laser mediums. As a result, while the segregation into local modes and accompanying instability occur in the samples which have average grain sizes larger than 5 µm, on the other hand when the average grain size is less than or equal to 5µm, it has been confirmed that there is no segregation into local modes and a stable oscillation is obtained. These results are shown in Table 1. As is shown in Table 1, when an Nd:YAG ceramic material and an Yb:YAG ceramic material with average grain sizes of 59.05µm, 51.85µm, 37.35µm, 29.03µm, 19.22µm, 5.61µm, 4.82µm, 3.20µm and 1.16µm are used as laser mediums, in the case where the average grain size becomes larger than 5µm, the instability leading to the segregation into local modes has been confirmed. Alternatively, in the case where the average grain size is 5µm or less, segregation into local modes is not observed.

**TABLE 1**

| SAMPLE | Nd:YAG | Nd:YAG | Nd:YAG | Nd:YAG | Nd:YAG | Nd:YAG | Yb:YAG | Yb:YAG | Nd:YAG |
|---|---|---|---|---|---|---|---|---|---|
| AVERAGE GRAIN SIZE(µm) | 59.05 | 51.85 | 37.35 | 29.03 | 19.22 | 5.61 | 4.82 | 3.20 | 1.16 |
| LOCAL MODE | YES | YES | YES | YES | YES | YES | NONE | NONE | NONE |
| DOPING AMOUNT(%) | 0.3 | 1.1 | 2.4 | 4.8 | 1.2 | 4.8 | 2.0 | 5.0 | 1.0 |

Furthermore, for reference, the doped amounts of Nd, Yb of each laser medium with an average grain size among 59.05µm, 51.85µm, 37.35µm, 29.03µm, 19.22µm, 5.61µm, 4.82µm, 3.20µm and 1.16 µm shown in Table 1 are measured, and the results are as follows: 0.3%. 1.1%, 2.4%, 4.8%, 1.2%, 4.8%, 2.0%, 5.0%, 1.0%.

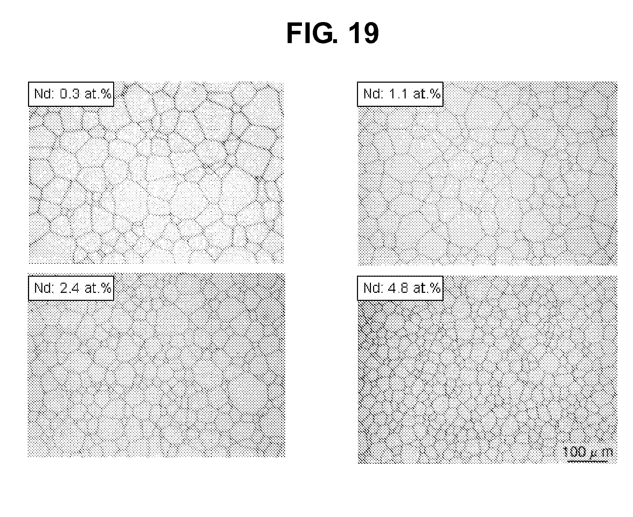

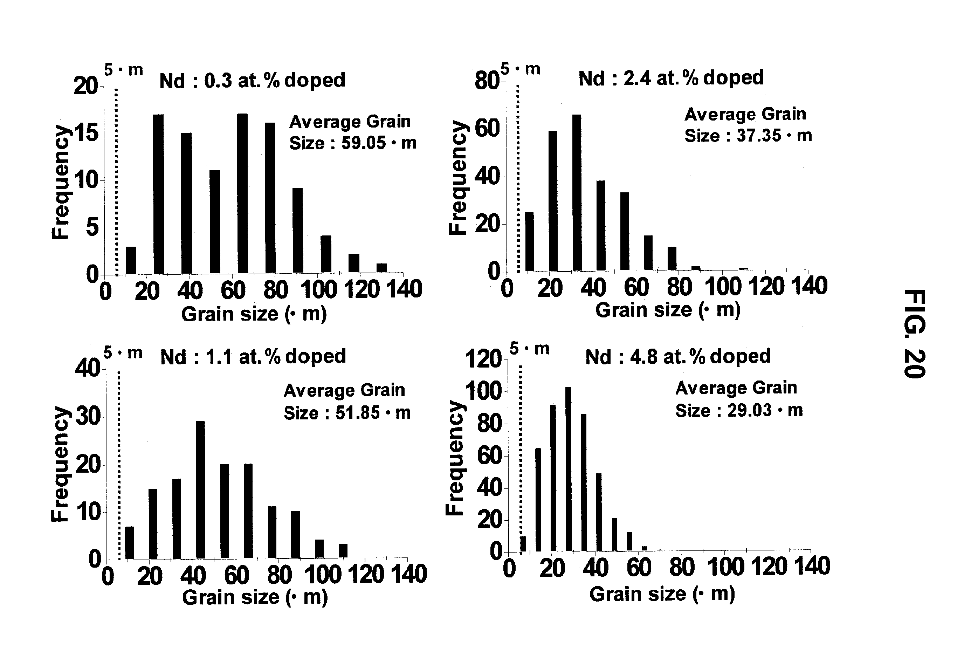

In addition, SEM photographs of samples of Nd:YAG ceramic doped with 0.3%, 1.1%, 4.8% Nd with average grain sizes of 59.95µm, 51.85µm, 37.35µm, 29.03µm respectively are shown in Fig. 19. In each of these SEM photographs, the length of the longest part of each grain is measured. The histograms which show frequencies with respect to lengths are shown in Fig. 20. In each histogram in Fig. 20, the horizontal axis corresponds to a grain size (µm) and the vertical axis corresponds to a frequency. In addition, the histograms of the doped amounts of Nd are 0.3%, 1.1%, 4.8% and 2.4%, which are shown by the histograms in Fig. 20 starting the top left and in rotation order in an anti-clockwise direction. From Table 1 and Fig. 20, it is clear that segregation into local modes occurs when an Nd:YAG ceramic material in which a grain smaller than 5µm does not exist and the average grain size is 5µm or more is used as a laser medium.

### (Fifth Embodiment)

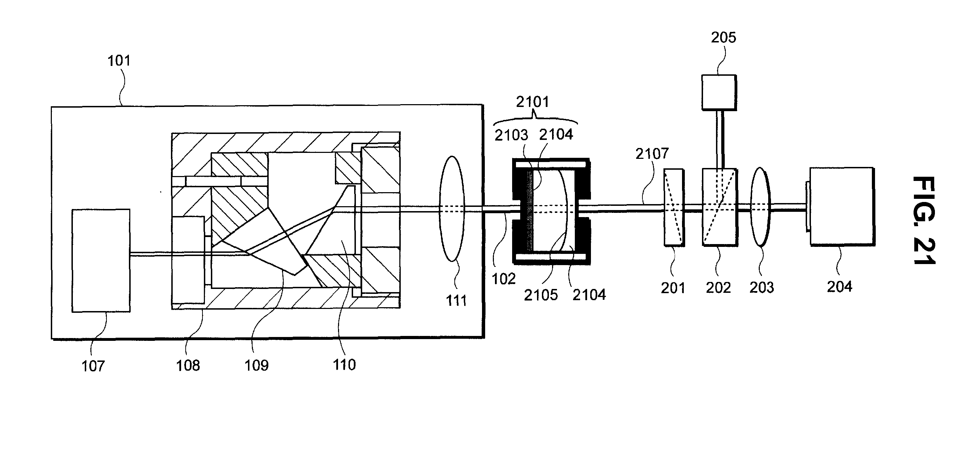

In each embodiment stated above, an endface resonator is used as a resonator. In the present invention, there is no limitation to use an endface resonator, and an external resonator can also be used. Fig. 21 shows a functional block diagram of a laser oscillator related to the fifth embodiment of the present invention. A Nd:YAG ceramic or a Yb:YAG ceramic with an average grain size of 5µm or less is arranged as a laser medium within an external resonator.

That is, the laser oscillator related to the fifth embodiment includes a laser light source 101, a flat mirror 2102 and a concave mirror 2105 which form the external resonator 2101. Furthermore, each element, which is the same as in the first embodiment, is assigned with the same reference numeral. In addition, while a Nd:YAG ceramic is used as a laser medium material with a flat mirror for the external resonator in the present embodiment, a Yb:YAG ceramic may be used as a laser medium material even in an external resonator, as explained concerning the endface resonator above.

Because the laser light source 101 is the same as the laser light source of the present invention related to the first embodiment stated above, an explanation is omitted here.

The flat mirror 2102 which forms the external resonator includes a laser medium 2103 and a first face 2104 which is coated with an antireflection film and a high reflecting film of dielectric multilayer films. A 1mm thick plate shaped Nd:YAG ceramic doped with 1 at. % Nd and having an average grain size of 1.1 to 1. 2µm is used as the laser medium 2103. The flat mirror 2102 allows 95% or more of a pumping light to pass through at a wavelength of 808nm and reflects 99.8 more at a wavelength of 1064nm of the laser beam which is oscillated.

The concave mirror 2105 which forms the external resonator includes a second face 2106 which has a concave surface with a 10mm curvature radius and is coated with a high reflective film of dielectric multilayer and which reflects 99% at a wavelength of 1064nm of the laser beam which is oscillated.

In the case where the flat mirror 2102 which forms the external resonator uses a Nd:YAG ceramic as the laser medium material, the wavelength of the pumping light 102 is 808nm for example.

The flat mirror 2102 and the first face 2104 are disposed so that the fist face 2104 and the second face 2106 are arranged facing each other with a distance of 5mm. When the pumping light 102 with an average beam diameter of 80µm passes through the flat mirror 2102 from the laser light source 101 and is irradiated into the ceramic which is the laser medium, only an emitted light from a ceramic of a particular wavelength which is reflected by the flat mirror 2102 and the concave mirror 2105 resonates and a laser beam 2103 oscillates at 1064nm in the present embodiment.

Because a device which measures the characteristics of the lasing beam 2103 for comparison is the same as in the first embodiment an explanation is omitted here.

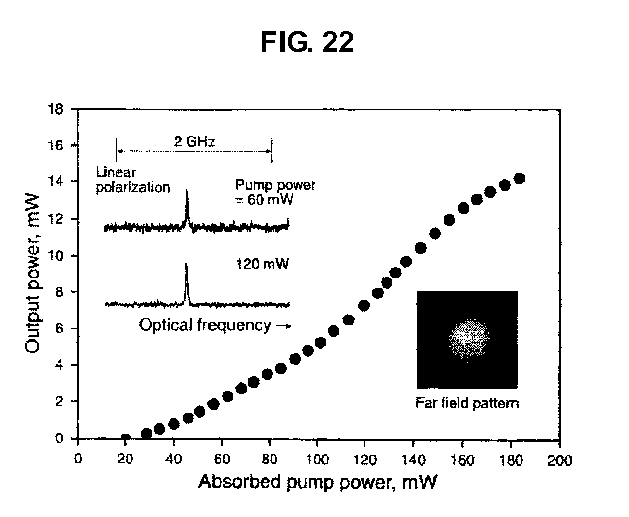

Fig. 22 is a diagram which shows the measurement results in the fifth embodiment of the characteristics of the laser beam 2103 which is oscillated. In the graph in Fig. 22, the power (absorbed pump power (mW)) of pumping light irradiated by the laser medium is assigned to the horizontal axis and the power (output power (mW)) of a lasing beam is assigned to the vertical axis. As shown as a far-field pattern (shown in the upper right part in the drawing) of a laser beam and a light spectrum (shown in the upper left part in the drawing), a single frequency oscillation is achieved in a TEM₀₀ mode in all the pumping power ranges by the laser oscillator related to the fifth embodiment of the present invention.

Furthermore, as stated above, the case where an external resonator using a flat mirror and a concave mirror is explained. However, the external resonator is not limited to one using a flat mirror and a concave mirror. For example, the same characteristics can be obtained by using a concave mirror and a concave mirror, a concave mirror and a convex mirror, or a flat mirror and a flat mirror as a general resonator.

## Claims

1. A laser oscillator comprising:
a laser light source which emits a pumping light; and
a laser medium which is irradiated with the pumping light and which includes Nd:YAG ceramic or Yb:YAG ceramic with an average grain size of 5µm or less.

2. The laser oscillator according to claim 1, wherein an average grain size of the laser medium is 4.82µm or less.

3. The laser oscillator according to claim 1 or claim 2, wherein the laser medium includes a first face having a first dielectric multilayer, and a second face having a second dielectric multilayer.

4. The laser oscillator according to claim 3, wherein the first dielectric multilayer is a multilayer film comprised of an antireflection coating and a high reflecting coating and the second dielectric multilayer is a multilayer comprised of a high reflecting coating.

5. The laser oscillator according to claim 4, wherein a transmission rate and a reflection rate of the first dielectric multilayer are each 95% and 99.8% or more respectively and a reflection rate of the second dielectric multilayer is 97% or more.

6. The laser oscillator according to any one of claims 1 to claim 5, wherein the laser medium is plate shaped.

7. The laser oscillator according to claim 1, wherein the laser medium is arranged in an external resonator.

8. A method of oscillating a laser beam comprising:
emitting a pumping light; and
irradiating the pumping light to a laser medium having Nd:YAG ceramic or Yb:YAG ceramic with an average grain size of 5µm or less.

9. The method of oscillating a laser beam according to claim 8, wherein an average grain size of the layer medium is 4.82µm.

10. The method of oscillating a laser beam according to claim 8 or claim 9, wherein the layer medium includes a first face having a first dielectric multilayer, and a second face having a second dielectric multilayer.

11. The method of oscillating a laser beam according to claim 10, wherein the first dielectric multilayer is a multilayer film comprised of an antireflection coating and a high reflecting coating and the second dielectric multilayer is a multilayer comprised of a high reflecting coating.

12. The method of oscillating a laser beam according to claim 11, wherein a transmission rate and a reflection rate of the first dielectric multilayer are each 95% and 99.8% or more respectively and a reflection rate of the second dielectric multilayer is 97% or more.

13. The method of oscillating a laser beam according to claim 8 wherein the laser medium is arranged in an external resonator.
